Europäisches Patentamt

European Patent Office

Office européen des brevets

(11) Veröffentlichungsnummer: **0 063 745**
**B1**

(12) **EUROPÄISCHE PATENTSCHRIFT**

(45) Veröffentlichungstag der Patentschrift:
02.05.85

(21) Anmeldenummer: 82103133.3

(22) Anmeldetag: 14.04.82

(51) Int. Cl.⁴: **H 02 M 7/527**

(54) Regelanordnung für einen selbstgeführten Wechselrichter mit Gleichspannungszwischenkreis.

(30) Priorität: 24.04.81 DE 3116342

(43) Veröffentlichungstag der Anmeldung:
03.11.82 Patentblatt 82/44

(45) Bekanntmachung des Hinweises auf die Patenterteilung:
02.05.85 Patentblatt 85/18

(84) Benannte Vertragsstaaten:
AT BE FR GB IT NL SE

(56) Entgegenhaltungen:
FR - A - 1 515 719
FR - A - 1 515 719
FR - A - 2 107 963
FR - A - 2 107 963
FR - A - 2 200 669
FR - A - 2 200 669

(73) Patentinhaber: BROWN, BOVERI & CIE
Aktiengesellschaft, Kallstadter Strasse 1,
D-6800 Mannheim 31 (DE)

(72) Erfinder: Kuhn, Werner, Dipl.-Ing., Eichenstrasse 23,
D-6944 Hemsbach (DE)

(74) Vertreter: Kempe, Wolfgang, Dr. et al, c/o Brown, Boveri
& Cie AG Postfach 351, D-6800 Mannheim 1 (DE)

**Beschreibung**

Die Erfindung bezieht sich auf eine Regelanordnung für einen selbstgeführten, nach dem Pulsbreitenmodulationsverfahren betriebenen Wechselrichter mit Gleichspannungszwischenkreis, wobei die Steuerbefehle für die Stromrichterventile des Wechselrichters durch Schnittpunktbildung einer dem Grundschwingungssollwert der Wechselrichter-Ausgangsspannung proportionalen Steuerspannung mit einer dem gegenüber höher frequenten periodischen Hilfsspannung gewonnen werden.

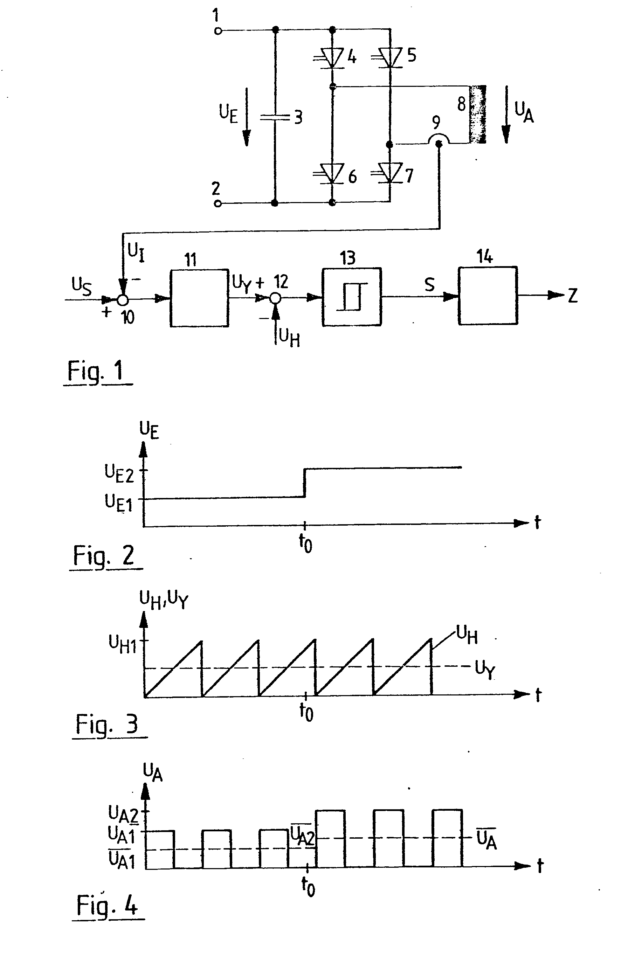

Ein Pulsbreitenmodulationsverfahren (Unterschwingungsverfahren) ist beispielsweise aus dem BBC-Silizium-Stromrichter-Handbuch, 1971, Seite 213 bis 216, bekannt. Es eignet sich zur Pulsbreitenmodulation für einen selbstgeführten Wechselrichter mit Gleichspannungszwischenkreis, wie in den Fig. 1 bis 4 dargestellt. In der Fig. 1 ist ein zweiphasiger Zwischenkreis-Wechselrichter mit Gleichspannungszwischenkreis dargestellt. Zwischen den Eingangsklemmen 1 und 2 des Zwischenkreises liegt die Eingangsgleichspannung $U_E$ an. Mit den Klemmen 1 und 2 ist ein Stützkondensator 3 verbunden. An Klemme 1 sind zünd- und löschbare Stromrichterventile 4 und 5 sowie an Klemme 2 zünd- und löschbare Stromrichterventile 6 und 7 angeschlossen. Die Ventile 4 und 6 sowie 5 und 7 sind jeweils miteinander verbunden. Am gemeinsamen Verbindungspunkt der Ventile 4 und 6 liegt die erste Klemme eines induktiven Verbrauchers 8, dessen zweite Klemme an den gemeinsamen Verbindungspunkt der Ventile 5 und 7 angeschlossen ist. Zwischen den Klemmen des Verbrauchers 8 liegt die Ausgangsspannung $U_A$ an.

In einer der Stromzuführung zum Verbraucher 8 ist ein Strommessgerät 9 angeordnet, das den Stromistwert $U_I$ mit negativem Vorzeichen an eine Additionsstelle 10 abgibt. Der Additionsstelle 10 liegt mit positivem Vorzeichen der Stromsollwert $U_S$ an. Die Additionsstelle 10 ist ausgangsseitig mit einem Stromregler 11 verbunden. Die ausgangsseitige Steuerspannung $U_Y$ des Stromreglers 11 wird einer Additionsstelle 12 mit positivem Vorzeichen zugeleitet. Der Additionsstelle 12 liegt ferner eine Hilfsspannung $U_H$ mit negativem Vorzeichen an. Die Additionsstelle 12 ist ausgangsseitig mit einem Komparator 13 beschaltet. Der Komparator 13 gibt ausgangsseitig Schaltbefehle S an einen Steuersatz 14 ab. Der Steuersatz 14 liefert Steuerimpulse Z an die Ventile 4, 5, 6, 7.

In Fig. 2 ist der zeitliche Verlauf der Eingangsspannung $U_E$ dargestellt. Zum Zeitpunkt $t_0$ steigt die Eingangsspannung $U_E$ von einem konstanten Wert $U_{E1}$ auf einen höheren Wert $U_{E2}$ an. In Fig. 3 sind der zeitliche Verlauf der sägezahnförmigen Hilfsspannung $U_H$ konstanter Amplitude $U_{H1}$ sowie der Steuerspannung $U_Y$ dargestellt. Jeweils bei Auftreten eines Schnittpunktes zwischen $U_H$ und $U_Y$ erfolgt das Pulsen der Ausgangsspannung $U_A$, wie in Fig. 4 dargestellt. Bis zum Zeitpunkt $t_0$ erreicht die Ausgangsspannung $U_A$ jeweils den Amplitudenwert $U_{A1}$ und der Mittelwert der Ausgangsspannung $\overline{U}_A$ beträgt $\overline{U}_{A1}$. Nach dem Zeitpunkt $t_0$ erreicht die Amplitude der Ausgangsspannung den erhöhten Wert $U_{A2}$ und der Mittelwert der Ausgangsspannung $\overline{U}_A$ steigt auf den Wert $\overline{U}_{A2}$ an.

Diese bekannte Regelanordnung hat also den Nachteil, dass sich bei Änderung der Eingangsgleichspannung (Zwischenkreisspannung) $U_E$ auch die Ausgangsspannung $U_A$ ändert. Diese unerwünschte Änderung der Ausgangsspannung $U_A$ muss vom überlagerten Strom-, Spannungs- oder Leistungsregler ausgeregelt werden, indem die Steuerspannung verändert wird. Diese Ausregelung hat störende Ausgleichsvorgänge in dem vom Wechselrichter gespeisten Verbraucher zur Folge.

Der Erfindung liegt davon ausgehend die Aufgabe zugrunde, eine Regelanordnung für einen selbstgeführten, nach dem Pulsbreitenmodulationsverfahren betriebenen Wechselrichter mit Gleichspannungszwischenkreis anzugeben, bei der eine störende Änderung der Eingangsgleichspannung ohne Auswirkung auf die vorgegebene Ausgangsspannung ist.

Diese Aufgabe wird erfindungsgemäss dadurch gelöst, dass ein Multiplizierer vorgesehen ist, dem eingangsseitig die Eingangsgleichspannung des Zwischenkreises sowie eine Hilfsspannung konstanter Amplitude als Faktoren zugeleitet werden und der ausgangsseitig eine Hilfsspannung abgibt, deren Amplitude proportional zum Wert der Eingangsgleichspannung ist.

Die mit der Erfindung erzielbaren Vorteile bestehen insbesondere darin, dass störende Ausgleichsvorgänge in dem vom Wechselrichter gespeisten Verbraucher bei Änderungen der Eingangsspannung des Zwischenkreises vermieden werden.

Ein Ausführungsbeispiel der Erfindung ist im folgenden anhand der Zeichnungen erläutert. Es zeigen:

Fig. 5 einen selbstgeführten Wechselrichter mit Gleichspannungszwischenkreis und Regelanordnung;

Fig. 6 den zeitlichen Verlauf der Eingangsgleichspannung;

Fig. 7 den zeitlichen Verlauf der Hilfsspannung und der Steuerspannung;

Fig. 8 den zeitlichen Verlauf der Ausgangsspannung.

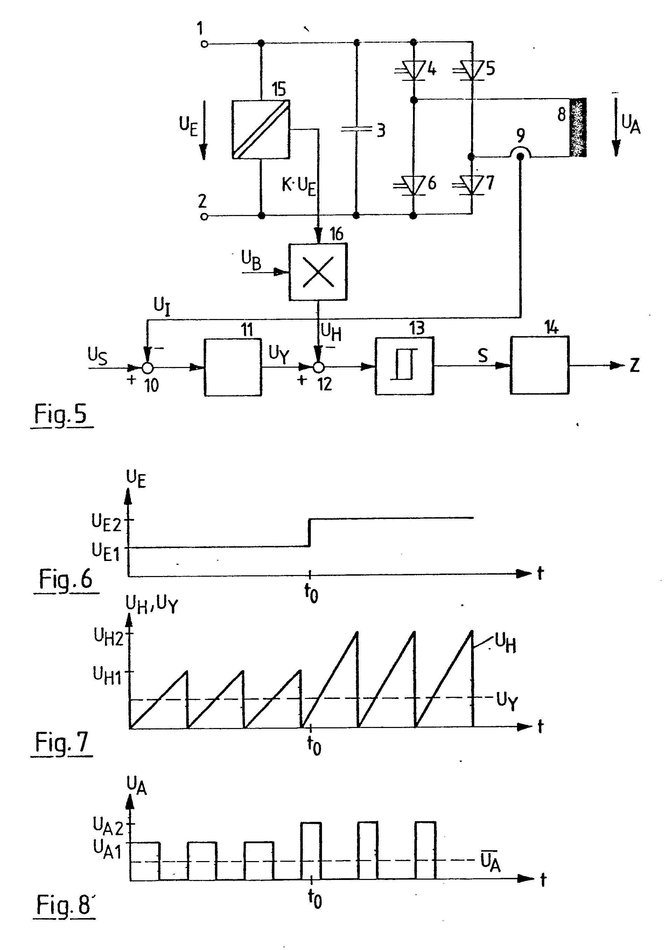

In Fig. 5 ist ein selbstgeführter Wechselrichter mit Gleichspannungszwischenkreis und Regelanordnung dargestellt. Zwischen den Eingangsklemmen 1 und 2 des Zwischenkreises sind ein Stützkondensator 3 sowie ein Spannungsmessgerät 15 geschaltet. Mit der Klemme 1 sind zünd- und löschbare Stromrichterventile 4 und 5 sowie mit der Klemme 2 zünd- und löschbare Stromrichterventile 6 und 7 verbunden. Am gemeinsamen Verbindungspunkt der Stromrichterventile 4 und 6 liegt die erste Klemme eines Verbrauchers 8 (z. B. Motor) sowie am gemeinsamen Verbindungspunkt der Stromrichterventile 5 und 7 die zweite Klemme des Verbrauchers 8. Am Verbraucher 8 liegt die Ausgangsspannung des Wechselrichters

$U_A$ an. Zur Vereinfachung ist in Fig. 5 ein zweiphasiger Wechselrichter dargestellt, die Erfindung findet jedoch vorzugsweise bei dreiphasigen Wechselrichtern zur Speisung von Drehstrom-Asynchronmotoren Anwendung.

Die zwischen den Klemmen 1 und 2 anliegende Eingangsgleichspannung $U_E$ des Zwischenkreises wird vom Spannungsmessgerät 15 erfasst, mit einem Faktor K bewertet und der Wert $K \cdot U_E$ wird einem Multiplizierer 16 zugeleitet. Dem Multiplizierer 16 wird als weiterer Faktor die sägezahnförmige Hilfsspannung $U_B$ zugeführt. Die ausgangsseitige Hilfsspannung des Multiplizierers $U_H = U_B \cdot K \cdot U_E$ wird einer Additionsstelle 12 mit negativem Vorzeichen zugeführt. Der Additionsstelle 12 liegt mit positivem Vorzeichen die Steuerspannung $U_Y$ an. Die Steuerspannung $U_Y$ kann bei einer gesteuerten Anordnung vorgegeben werden oder sie wird bei einer geregelten Anordnung mittels eines Strom- bzw. Spannungs- bzw. Leistungsreglers gewonnen. Im Ausführungsbeispiel wird die Steuerspannung $U_Y$ mit Hilfe eines Stromreglers 11 ermittelt, der eingangsseitig mit einer Additionsstelle 10 verbunden ist. Der Additionsstelle 10 liegen eingangsseitig mit positivem Vorzeichen ein Stromsollwert $U_S$ sowie mit negativem Vorzeichen ein Stromistwert $U_I$ an. Der Stromistwert $U_I$ wird mit Hilfe eines in einer der Stromzuleitungen des Verbrauchers 8 angeordneten Strommessgerätes 9 ermittelt.

Die Additionsstelle 12 ist ausgangsseitig mit einem Komparator 13 verbunden. Der Komparator 13 liefert ausgangsseitig Schaltbefehle S an einen Steuersatz 14, der Steuerbefehle Z zur Zündung bzw. Löschung der Stromrichterventile 4, 5, 6, 7 abgibt.

Zur Beschreibung der Funktionsweise der erfindungsgemässen Regelanordnung sind in den Fig. 6, 7, 8 die zeitlichen Verläufe der Eingangsgleichspannung $U_E$ des Wechselrichters, der sägezahnförmigen Hilfsspannung $U_H$, der Steuerspannung $U_Y$ sowie der Ausgangsspannung $U_A$ des Wechselrichters dargestellt. Wie aus Fig. 6 ersichtlich ist, steigt die Eingangsgleichspannung (Zwischenkreisspannung) $U_E$ aufgrund einer Störung zum Zeitpunkt $t_0$ von einem konstanten Wert $U_{E1}$ auf einen erhöhten Wert $U_{E2}$ an. Diese Spannungserhöhung wird vom Spannungsmessgerät 15 erfasst und an den Multiplizierer 16 weitergegeben. Der Multiplizierer 16 bildet das Produkt $U_H = U_B \cdot K \cdot U_E$ und leitet es der Additionsstelle 12 zu. Die Amplitude der sägezahnförmigen Hilfsspannung $U_H$ steigt also vom Wert $U_{H1}$ vor dem Zeitpunkt $t_0$ auf den Wert $U_{H2}$ nach dem Zeitpunkt $t_0$, d. h. die Eingangsgleichspannung (Zwischenkreisspannung) $U_E$ wird als Störgrösse in die Regelung so eingeführt, dass die Amplitude der Hilfsspannung proportional zur Eingangsgleichspannung ist.

Die Schaltbefehle S bzw. Steuerimpulse Z für die Stromrichterventile 4, 5, 6, 7 des Wechselrichters werden durch Schnittpunktbildung zwischen $U_H$ und $U_Y$ gewonnen. Die Steuerspannung $U_Y$ ist dabei proportional zum Grundschwingungssollwert der Ausgangsspannung $U_A$ und wird meist sinusförmig vorgegeben. Im Ausführungsbeispiel

ist die Steuerspannung $U_Y$ zur Vereinfachung konstant angenommen. Die Hilfsspannung $U_H$ kann dreieckförmig, sägezahnförmig, trapezförmig usw. vorgegeben sein. Bei Auftreten eines Schnittpunktes zwischen der Anstiegsflanke von $U_H$ und der Steuerspannung $U_Y$ erfolgt eine Löschung des gerade stromführenden Stromrichterventils, d. h. die Ausgangsspannung $U_A$ des Wechselrichters fällt auf den Wert 0 ab. Bei Auftreten eines Schnittpunktes zwischen der Abfallflanke von $U_H$ und der Steuerspannung $U_Y$ erfolgt eine Zündung eines der Stromrichterventile, d. h. die Ausgangsspannung $U_A$ steigt auf den Amplitudenwert $U_{A1}$ (vor dem Zeitpunkt $t_0$) bzw. auf den erhöhten Amplitudenwert $U_{A2}$ (nach dem Zeitpunkt $t_0$). Durch die Erhöhung der Amplitude der Hilfsspannung vom Wert $U_{H1}$ auf den Wert $U_{H2}$ ergeben sich steilere Anstiegsflanken der Hilfsspannung $U_H$ und damit eine kürzere Leitdauer der Stromrichterventile bzw. schmalere Pulsbreiten der Ausgangsspannung $U_A$. Die Spannungs-Zeit-Flächen der einzelnen Pulse der Ausgangsspannung $U_A$ vor bzw. nach dem Zeitpunkt $t_0$ bleiben dabei konstant, da die erhöhte Amplitude $U_{A2}$ der Ausgangsspannung $U_A$ durch die Verkleinerung der Pulsbreite bzw. die verkürzte Leitdauer der Ventile kompensiert wird. Der Mittelwert der Ausgangsspannung $\overline{U}_A$ bleibt deshalb auch nach Erhöhung der Eingangsgleichspannung $U_E$ konstant.

**Patentanspruch**

1. Regelanordnung für einen selbstgeführten, nach dem Pulsbreitenmodulationsverfahren betriebenen Wechselrichter mit Gleichspannungszwischenkreis, wobei die Steuerbefehle für die Stromrichterventile (4–7) des Wechselrichters durch Schnittpunktbildung einer dem Grundschwingungssollwert der Wechselrichter-Ausgangsspannung ($U_A$) proportionalen Steuerspannung ($U_Y$) mit einer demgegenüber höher frequenten periodischen Hilfsspannung ($U_H$) gewonnen werden, dadurch gekennzeichnet, dass ein Multiplizierer (16) vorgesehen ist, dem eingangsseitig die Eingangsgleichspannung ($U_E$) des Zwischenkreises sowie eine Hilfsspannung ($U_B$) konstanter Amplitude als Faktoren zugeleitet werden und der ausgangsseitig eine Hilfsspannung ($U_H$) abgibt, deren Amplitude proportional zum Wert der Eingangsgleichspannung ($U_E$) ist.

**Claim**

1. Controlling arrangement for a self-controlled inverter, operated in accordance with the pulse-width modulation method, having a direct-voltage intermediate circuit, the control commands for the rectifiers (4–7) of the inverter being obtained by forming an intersection between a control voltage ($U_Y$), which is proportional to the nominal value of the fundamental frequency of the inverter output voltage ($U_A$), and a periodic auxiliary voltage ($U_H$) which, compared with the former, has a higher frequency, characterised in that a multiplier (16) is

**0 063 745**

provided, which is supplied at its input, with the input direct voltage ($U_E$) of the intermediate circuit and a constant-amplitude auxiliary voltage ($U_B$) as factors, and which provides at its output an auxiliary voltage ($U_H$), the amplitude of which is proportional to the value of the input direct voltage ($U_E$).

**Revendication**

1. Dispositif de régulation destiné à un onduleur à autoconduction fonctionnant d'après le procédé de modulation par largeur d'impulsion et comprenant un circuit intermédiaire à tension continue, les ordres de commande des valves (4–7) de mutateur de l'onduleur étant alors obtenus par la formation d'un point d'intersection d'une tension de commande ($U_Y$) proportionelle à la valeur nominale d'oscillation fondamentale de la tension de sortie ($U_A$) de l'onduleur avec une tension auxiliaire ($U_H$) périodique d'une fréquence comparativement plus élevée, caractérisé en ce qu'on prévoit un multiplicateur (16) auquel on conduit à l'entrée la tension continue d'entrée ($U_E$) du circuit intermédiaire ainsi qu'une tension auxiliaire ($U_B$) d'amplitude constante en tant que facteurs et qui délivre du côte de la sortie une tension auxiliaire ($U_H$) dont l'amplitude est proportionelle à la valeur de la tension continue d'entrée ($U_E$).

Fig. 1

Fig. 2

Fig. 3

Fig. 4

5

Fig. 5

Fig. 6

Fig. 7

Fig. 8